# EUROPÄISCHE PATENTSCHRIFT

(11) **EP 1 931 540 B1**
(45) Veröffentlichungstag und Bekanntmachung des Hinweises auf die Patenterteilung: **11.03.2009**
(21) Anmeldenummer: 06792063.7
(22) Anmeldetag: 14.09.2006
(51) Int. Cl.: B60R 21/16, B60R 21/231

(54) **AIRBAGEINRICHTUNG**
AIRBAG DEVICE
ENSEMBLE COUSSIN GONFLABLE

(30) Priorität: 04.10.2005 DE 102005047606
(43) Veröffentlichungstag der Anmeldung: 18.06.2008
(73) Patentinhaber: AUTOLIV DEVELOPMENT AB, 447 83 Vargarda (SE)
(72) Erfinder: JOHANSSON, Jack, S-438 01 Landvetter (SE); LEIBELT, Rüdiger, 85253 Erdweg (DE); WOLF, Harald, 82131 Stockdorf (DE)
(74) Vertreter: Stornebel, Kai
(86) Internationale Anmeldenummer: PCT/EP2006/008967
(87) Internationale Veröffentlichungsnummer: WO 2007/039061

(56) Entgegenhaltungen:
- EP-A- 1 364 840
- DE-A1- 19 703 945
- DE-A1- 19 860 827
- DE-C1- 19 932 696

## Beschreibung

Die Erfindung betrifft eine Airbageinrichtung mit einem Airbag aus einem Gewebe, der an einer Fahrzeugstruktur befestigt und über einen Gasgenerator mit Gas befüllbar ist und sich im befüllten Zustand vor dem Fahrzeuginsassen erstreckt. Die Erfindung ist insbesondere für Kraftfahrzeuge wie Pkw, Lkw oder Omnibusse geeignet und bietet Schutz insbesondere bei einem Frontalaufprall des Kraftfahrzeuges.

Aus der DE 198 60 827 A1 ist ein Rückhaltesystem für einen Frontalaufprall eines Fahrzeugs mit einem am Fahrzeugdach gehaltenen Airbag bekannt, der sich bei Vorliegen entsprechender Sensordaten vorhangartig entfaltet. Um die Lagestabilität des sich entfalteten Airbags zu gewährleisten, ist es vorgesehen, dass dieser sich mit einem Teilbereich der vorderen Gewebepartie am Fahrzeugaufbau abstützt. Dazu ist die Anordnung so gewählt, dass sich der Airbag nach vorne und unten entlang des oberen Bereiches der Frontscheibe und dann in Richtung des Insassen entfaltet. In einer Variante ist ein befüllbarer Vorhang vorgesehen, auf dem ein Thoraxteil und ein Kopfteil angeordnet und jeweils separat mit dem Vorhang verbunden und befüllbar sind.

Der sich bis zum Abdomenbereich des Fahrzeuginsassen erstreckende Airbag wird bei einer Vorwärtsbewegung des Fahrzeuginsassen aufgrund eines Frontalaufpralls zwischen dem Oberschenkel und dem Oberkörper eingeklemmt und bleibt relativ zu dem Kopf fixiert. Darüber hinaus ist der Airbag im Dachbereich des Fahrzeuges fixiert, so dass bei einem Eindringen des Fahrzeuginsassen in den Airbag sehr hohe Zugspannungen in dem Airbaggewebe auftreten. Dies führt zu einem relativ harten Aufprall und hohen Kopf- und Nackenbelastungen, bis hin zu einem Zurückschleudern des Kopfes.

Um diesem Problem zu begegnen, ist im Stand der Technik die Ausbildung von Sollrissstellen im Befestigungsbereich des Airbags bekannt, so dass der obere Haltepunkt wegfällt. Dies führt zu einer Lageinstabilität des Airbags und zu einer verminderten Sicherheit für den Fahrzeuginsassen.

Aufgabe der Erfindung ist es, eine verbesserte Airbageinrichtung bereitzustellen, die die Kopf- und Nackenbelastungen verringert und gleichzeitig eine Lagestabilität des Airbags gewährleistet.

Erfindungsgemäß wird diese Aufgabe durch eine Airbageinrichtung mit den Merkmalen des Anspruchs 1 gelöst. Vorteilhafte Ausgestaltungen und Weiterbildungen der Erfindung sind in den Unteransprüchen beschrieben.

Die erfindungsgemäße Airbageinrichtung mit einem Airbag aus einem Gewebe, der an einer Fahrzeugstruktur, insbesondere oberhalb des Fahrzeuginsassen, befestigt und über einen Gasgenerator mit Gas befüllbar ist und sich im befüllten Zustand vor dem Fahrzeuginsassen erstreckt, sieht vor, dass in dem Airbaggewebe im Kopfaufprallbereich ein Ausschnitt ausgebildet ist, in den der Kopf des Fahrzeuginsassen eindringen kann und der von einer Abdeckung verschlossen ist, die von einer Zugspannung in dem Airbaggewebe entkoppelt ist. Aufgrund der Entkopplung der Abdeckung von der in dem Airbaggewebe herrschenden Zugspannung ist es möglich, dass der Kopf des Fahrzeuginsassen in die Abdeckung bzw. in das von der Abdeckung gebildet Luftvolumen eindringen kann, ohne dass dieser zurückprallt. Die Entkopplung von der Zugspannung innerhalb des Airbaggewebes vermeidet, dass der Kopf auf eine gespannte bzw. sich spannende Gewebebahn auftritt und wie von einem Trampolin zurückgeprallt wird. Dabei ist der gesamte Airbag aufgrund der beibehaltenen Fixierung, insbesondere wenn der Airbag oberhalb des Fahrzeuginsassen befestigt ist, stabil, so dass ein Verlagern des befüllten Airbags und damit das Risiko eines Vorbeigleitens des Fahrzeuginsassen vermieden wird.

Eine Weiterbildung der Erfindung sieht vor, dass die Abdeckung vollständig von der Zugspannung in dem übrigen Airbaggewebe entkoppelt ist, so dass der in das Kissen eindringende Kopf nur von dem Gasdruck aufgefangen wird. Eine teilweise Entkopplung sieht vor, dass nur ausgewählte Bereiche der Abdeckung von der Zugspannung entkoppelt sind oder dass eine Verringerung der in der Abdeckung wirkenden Zuspannung bzw. die Übertragung der Zugspannung von dem Airbaggewebe auf die Abdeckung erfolgt.

Die Abdeckung ist bevorzugt in einer dem Fahrzeuginsassen zugewandten Gewebebahn ausgebildet, die die Hauptgewebebahn des Airbags ausbildet, die eine Schlaufe ausbildet und deren Seiten durch entsprechend ausgebildete Seitenbahnen verschlossen sind.

Die Abdeckung kann als ein in Richtung auf den Fahrzeuginsassen hervorstehendes Kissen ausgebildet sein, das von dem übrigen Airbag hervorsteht und eine schnellere Kopplung des Kopfes mit dem Airbag im Falle eines Unfalles gewährleistet. Dadurch wird der Schutz des Fahrzeuginsassen weiter erhöht.

Die Abdeckung kann als ein separater Zuschnitt an dem Airbag befestigt, insbesondere angenäht sein und den Ausschnitt abdecken. Alternativ ist vorgesehen, dass die Abdeckung als Teil einer Gewebebahn, z. B. der Hauptgewebebahn, des Airbags ausgebildet ist, die an Seitenbahnen des Airbags befestigt ist und im Bereich der Abdeckung eine zum Fahrzeuginsassen weisende Kontur hat. Das Kissen wird somit durch die Kontur der Seitenbahnen ausgebildet; die Zugkräfte werden über die Seitenbahnen aufgenommen, während aufgrund der größeren Länge der Hauptgewebebahn das Eintauchen des Kopfes in das Kissen ermöglicht wird. Dieses Eintauchen erfolgt solange allein gegen den Gasinnendruck, wie das Extramaterial bzw. das Kissenmaterial nicht so weit eingerückt wird, dass ebenfalls Zugspannungen in dem Gewebe der Abdeckung auftreten.

Die Abmessungen des Kissens bzw. der Abdeckungen sind so gewählt, dass der Kopf ausreichend tief in den Airbag eindringen kann, um entsprechend aufgefangen zu werden. Dabei ist die benötigte Eindringtiefe in Abhängigkeit von den zulässigen Grenzwerten, üblichen biometrischen Daten der Fahrzeuginsassen, des Gasinnendruckes sowie der Aufprallschwere abhängig. Eine Auslegung und Dimensionierung kann anhand von statistischen Daten und geforderten Grenzwerten erfolgen.

Bevorzugt besteht die Abdeckung auch aus einem Gewebe, beispielsweise aus dem Gewebe des Airbags, wenn sie als separates Element an dem Airbag angenäht ist. Alternative Materialien können ebenfalls vorgesehen sein.

Das Kissen, das durch die Hauptgewebebahn oder durch den separaten Zuschnitt ausgebildet ist, erstreckt sich in einer Variante über die gesamte Breite des Airbags, um auch bei einer unüblichen Sitzposition des Fahrzeuginsassen bei einem Aufprall die optimale Schutzfunktion bereitstellen zu können.

Zur Unterstützung der Aufnahme von Zugkräften durch das Airbaggewebe und zur Entkopplung der Abdeckung von Zugkräften in dem übrigen Airbaggewebe kann auf der dem Fahrzeuginsassen abgewandten Seite der Abdeckung die Anordnung von Zugbändern vorgesehen sein, die in einem relativ großen Abstand voneinander angeordnet sind und zur Stabilisierung des Gesamtairbags beitragen.

Der Airbag ist bevorzugt oberhalb eines Fahrzeuginsassen, z.B. an der Dachkonstruktion oder dem Dachhimmel des Fahrzeuges montiert und erstreckt sich im entfalteten Zustand bevorzugt bis zum Abdomenbereich des jeweiligen Fahrzeuginsassen. Alternativ kann nur der Kopfbereich durch den Airbag geschützt werden.

Nachfolgend werden Ausführungsbeispiele der Erfindung anhand der beigefügten Figuren näher erläutert. Es zeigen:
- Figuren 1a - 1c -: eine erste Variante der Airbageinrichtung;
- Figuren 2a und 2b -: Einzeldarstellungen einer Abdeckung;
- Figuren 3a und 3b -: Zuschnitte von Seitenteilen und einer Gewebebahn; sowie
- Figuren 4a und 4b-: Darstellungen einer Variante der Airbageinrichtung.

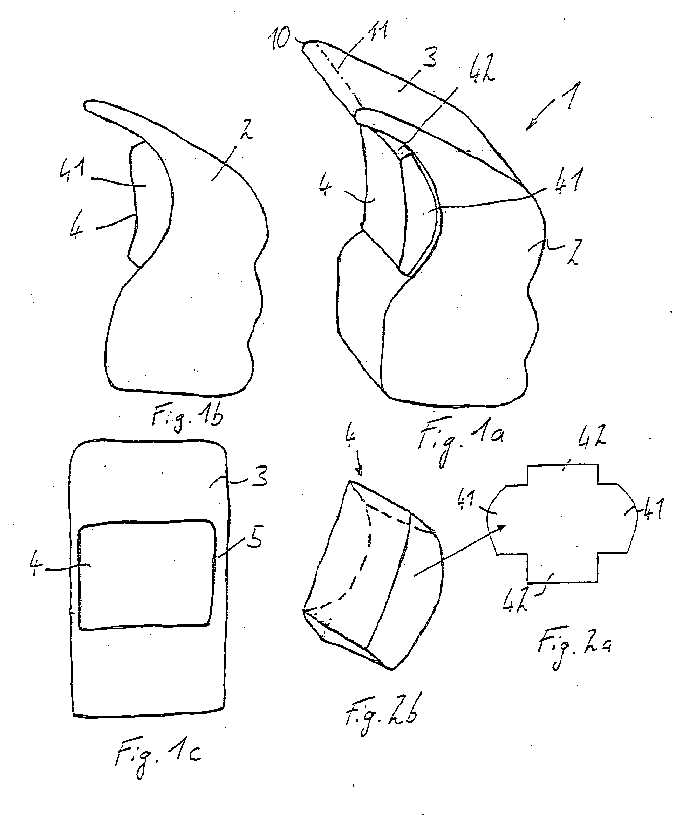

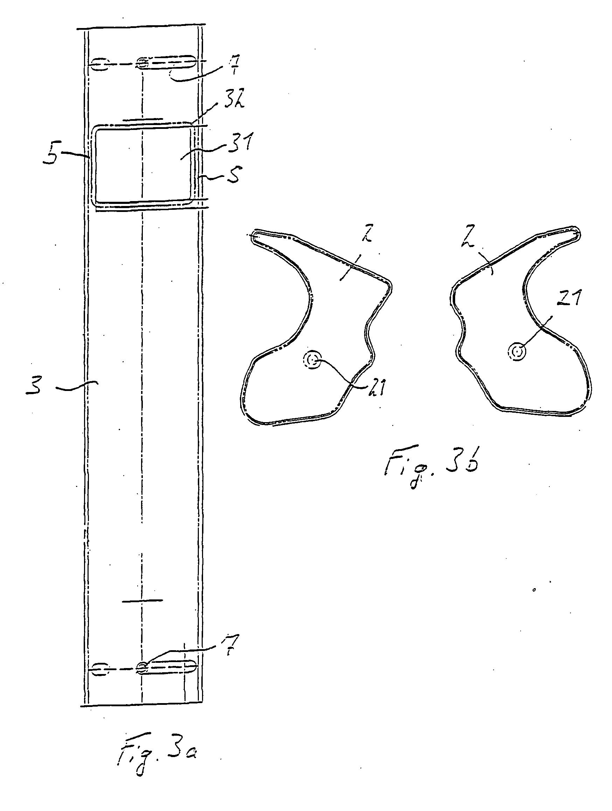

In der Figur 1 a ist in perspektivischer Schräg/-Draufsicht eine Airbageinrichtung mit einem Airbag 1 gezeigt, der an seinem oberen Ende 10 an einer Fahrzeugstruktur, insbesondere an einem Kraftfahrzeugdach, befestigbar ist. Der Airbag 1 der Airbageinrichtung kann bei Vorliegen entsprechender Sensordaten durch einen nicht dargestellten Gasgenerator mit Gas befüllt werden. Der Airbag 1 ist aus Gewebezuschnitten 2, 3, 4 aufgebaut, wobei Seitenbahnen 2 und eine die Kontur der Seitenbahnen 2 umgebende Hauptgewebebahn 3 die Grundform des Airbags 1 ausbilden. In der Hauptgewebebahn 3 im Bereich des Kopfaufpralles bei einem möglichen Frontalaufprall ist eine in der Figur 3a dargestellte Ausnehmung 31 ausgebildet, die durch eine Abdeckung 4 abgedichtet ist. Die Abdeckung 4 erstreckt sich von der Kontur der Seitenbahnen 2 ausgehend von der Oberfläche der Hauptgewebebahn 1 in Richtung auf den Fahrzeuginsassen, wobei sich die Tiefe des durch die Abdeckung 4 gebildeten Kissens durch die Dimensionierung der Seiten- und Stirnflächen 41, 42 ergibt. Die Hauptgewebebahn 3 ist im oberen Befestigungsbereich über eine Naht 11 geschlossen und bildet so eine Schlaufe aus.

In der Figur 1b ist in Seitenansicht der Airbag 1 der Figur 1a gezeigt. An der Kontur des Airbags 1 ist zu erkennen, dass im Abdomenbereich eine größere Tiefe als im Kopfaufprallbereich vorhanden ist. Über diese Kontur der Seitenbahnen 2 in Richtung auf den nicht dargestellten Fahrzeuginsassen hinausstehend ist die Abdeckung 4 der nicht dargestellten Ausnehmung mit dem Seitenstück 41 zu erkennen. Das in Richtung auf den Fahrzeuginsassen hervorstehende Kissen 4 ermöglicht einen schnellen Kontakt des Fahrzeuginsassen mit dem Airbag 1, wodurch die Leistungsfähigkeit des Airbags 1 erhöht ist.

Die in der Figur 1c dargestellte Draufsicht auf den Airbag 1 aus Sicht eines Fahrzeuginsassen zeigt, dass die Abdeckung 4 auf die Hauptgewebebahn 3 aufgesetzt ist, wobei neben der Abdeckung 4 beiderseitig ein Gewebestreifen 5 vorhanden ist. Diese Gewebestreifen 5 dienen zur Aufnahme von Zugkräften, die innerhalb des Gewebestreifens 3 auftreten, wenn der Airbag 1 zwischen den Oberkörper und den Oberschenkel des Fahrzeuginsassen eingeklemmt wird. Diese Zugkräfte werden nicht auf die Abdeckung 4 übertragen, die wie ein Kissen ausgebildet und von der Übertragung dieser im Gewebe wirkenden Zugkräfte entkoppelt ist. In den Figuren 2a und 2b ist im Detail die Abdeckung 4 gezeigt, die aus einem Gewebezuschnitt besteht, dessen Seiten- und Stirnflächen 41, 42 hochgeklappt und miteinander vernäht werden, um die haubenartige Abdeckung 4 auszubilden. Die Seitenflächen 41 weisen eine der Kontur der Seitenbahnen 2 entsprechende Formen auf, so dass diese an die Hauptgewebebahn 3 angenäht oder angeklebt werden kann. Zusammen mit den Seitenbahnen 2 und der Hauptgewebebahn 3 bildet die Abdeckung 4 den im Wesentlichen geschlossenen Airbag 1 aus, der gegebenenfalls Ventilationsöffnungen aufweist.

In den Figuren 3a und 3b sind die Zuschnitte der Seitenbahnen 2 und der Hauptgewebebahn 3 dargestellt. In der Figur 3a ist der Ausschnitt 31 des im Wesentlichen rechtwinkligen Zuschnittes der Hauptgewebebahn 3 gezeigt. Eine Befestigungsnaht 32 für die Abdeckung 4 ist ebenfalls angedeutet. Beiderseits des Ausschnittes 31 sind Gewebestreifen 5 vorgesehen, die für eine Formstabilität auch bei Übertragung von Zugkräften sorgen. An den Schmaiseiten des Zuschnittes der Hauptgewebebahn 3 kann dieser vernäht werden, wobei Aufnahmeeinrichtungen 7 für einen nicht dargestellten Gasgenerator vorgesehen sind. Entlang der Längsseiten des Zuschnittes sind Nähte zum Verbinden mit den Seitenteilen 2, die in der Figur 3b gezeigt sind, vorgesehen. Die Seitenbahnen 2 bilden die Form des Airbags 1 in Fahrtrichtung aus und verlaufen im montierten und aufgeblasenen Zustand im Wesentlichen parallel zueinander. Ventilationsöffnungen 21 können in den Seitenbahnen 2 untergebracht sein.

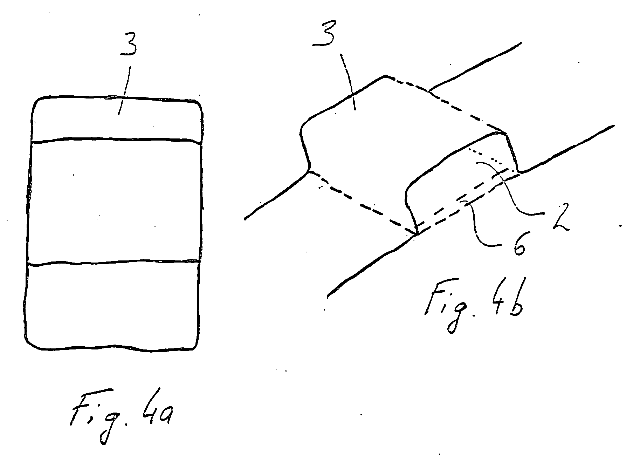

Eine alternative Ausgestaltung des Airbags 1 ist in den Figuren 4a und 4b gezeigt, bei denen die Seitenbahnen 2 eine in Richtung des Fahrzeuginsassen hervorstehende Kontur im Kopfaufprallbereich aufweisen. Die Seitenbahnen 2 übernehmen somit die Funktion der Seitenflächen 41 des separaten Gewebezuschnittes aus der Figur 1a. Der Ausschnitt 31 erstreckt sich nunmehr über die gesamte Breite des Airbags 1, wodurch ein separater Zuschnitt gemäß der Figuren 2a und 2b entfällt und die Gewebebahn 3 durchgängig umlaufend um die Seitenteile 2 herumgelegt werden kann. Zur Stabilisierung des Airbags 1 können hinter dem Kissen bzw. der in Richtung auf den Fahrzeuginsassen ausgebildeten Ausbeulung Zugbänder 6 angeordnet sein, die gegebenenfalls auftretende Zugkräfte aufnehmen. Die übrigen Zugkräfte werden über die Seitenbahnen 2 aufgenommen.

Beiden Ausführungsformen ist gemeinsam, dass eine Unterbrechung der Gewebespannung im Kopfaufprallbereich erfolgt, so dass sich das in diesem Bereich gebildete Kissen nach innen in Richtung auf den Airbag 1 eindrücken lässt. Das Gewebe im Kopfaufprallbereich ist von Zugspannungen, die durch die beiden Fixierstellen am Einklemmbereich zwischen Oberschenkeln und Oberkörper sowie dem Befestigungspunkt in der Dachkonstruktion bei Eintauchen des Fahrzeuginsassen entstehen können, entkoppelt, so dass der Kopfaufprallbereich nachgiebig und weich ausgebildet ist. Dadurch werden der Kopf und der Nacken des Fahrzeuginsassen bei einem Fahrzeugaufprall und einem Eintauchen in den Airbag 1 weniger belastet. Der Airbag 1 kann auch im entfalteten Zustand im Dachbereich des Fahrzeuges befestigt bleiben; gleichzeitig ist der Airbag 1 zwischen dem Oberkörper und den Oberschenkeln des Fahrzeuginsassen fixiert, so dass die Position des Airbags 1 insgesamt stabil ist. Dennoch kann der Kopf des Fahrzeuginsassen bei einem Frontalaufprall tief in den Airbag 1 eintauchen, ohne dass Zugspannungen innerhalb des Gewebes diese Bewegungen verhindern würden. Die Eindringtiefe ist von der Dimensionierung der Abdeckung 4 bzw. den Vorsprüngen in der Kontur der Seitenbahnen 2 festgelegt. Sofern der Ausschnitt in dem Gewebe groß genug ist, kann der Kopf des Fahrzeuginsassen sehr tief in den Airbag 1 eindringen, gegebenenfalls bis zu einer Einbeulung, die der Ausbeulung im entfalteten Zustand entspricht.

Durch die Ausgestaltung ist es möglich, eine direkte Befüllung des Airbags 1 durch den Gasgenerator ohne Zwischenschaltung von Leitungen oder dergleichen vorzunehmen, die die Stabilität verringern und die Befüllzeiten vergrößern würden.

## Patentansprüche

1. Airbageinrichtung mit einem Airbag (1) aus einem Gewebe, der an einer Fahrzeugstruktur befestigt und über einen Gasgenerator mit Gas befüllbar ist und sich im befüllten Zustand vor dem Fahrzeuginsassen erstreckt, **dadurch gekennzeichnet, dass** in dem Airbaggewebe im Kopfaufprallbereich ein Ausschnitt (31) ausgebildet ist, in den der Kopf des Fahrzeuginsassen eindringen kann und der von einer Abdeckung (4) verschlossen ist, die von einer Zugspannung in dem Airbaggewebe entkoppelt ist.

2. Airbageinrichtung nach Anspruch 1, **dadurch gekennzeichnet, dass** die Abdeckung (4) vollständig von der Zugspannung in dem übrigen Airbaggewebe entkoppelt ist.

3. Airbageinrichtung nach Anspruch 1 oder 2, **dadurch gekennzeichnet, dass** die Abdeckung (4) in einer dem Fahrzeuginsassen zugewandten Gewebebahn (3) ausgebildet ist.

4. Airbageinrichtung nach einem der voranstehenden Ansprüche, **dadurch gekennzeichnet, dass** die Abdeckung (4) als ein in Richtung auf den Fahrzeuginsassen hervorstehendes Kissen ausgebildet ist.

5. Airbageinrichtung nach einem der voranstehenden Ansprüche, **dadurch gekennzeichnet, dass** die Abdeckung (4) als ein separater Zuschnitt an dem Airbag (1) befestigt, insbesondere angenäht ist.

6. Airbageinrichtung nach einem der Ansprüche 1 bis 4, **dadurch gekennzeichnet, dass** die Abdeckung (4) als Teil einer Gewebebahn (3) des Airbags (1) ausgebildet ist, die an Seitenbahnen (2) des Airbags befestigt ist und im Bereich der Abdeckung (4) eine zum Fahrzeuginsassen weisende Kontur hat.

7. Airbageinrichtung nach einem der Ansprüche 1 bis 4, **dadurch gekennzeichnet, dass** die Abdeckung (4) aus einem Gewebe besteht.

8. Airbageinrichtung nach einem der Ansprüche 4 bis 7, **dadurch gekennzeichnet, dass** das Kissen sich über die Breite des Airbags (1) erstreckt.

9. Airbageinrichtung nach einem der voranstehenden Ansprüche, **dadurch gekennzeichnet, dass** auf den dem Fahrzeuginsassen abgewandten Seite der Abdeckung (4) Zugbänder (6) zur Aufnahme von Zugkräften des Airbaggewebes angeordnet sind.

10. Airbageinrichtung nach einem der voranstehenden Ansprüche, **dadurch gekennzeichnet, dass** der Airbag (1) oberhalb eines Fahrzeuginsassen, insbesondere in einem Dachhimmel eines Fahrzeuges montiert ist.

11. Airbageinrichtung nach einem der voranstehenden Ansprüche, **dadurch gekennzeichnet, dass** der Airbag (1) sich im entfalteten Zustand bis zum Abdomenbereich des Fahrzeuginsassen erstreckt.

## Claims

1. Airbag device having an airbag (1) made from a woven fabric which is fastened to a vehicle structure, can be filled with gas via a gas generator and extends in front of the vehicle occupant in the filled state, **characterized in that** a section (31) is formed in the airbag woven fabric in the head impact region, into which section (31) the head of the vehicle occupant can penetrate and which section (31) is closed by a cover (4) which is decoupled from a tensile stress in the airbag woven fabric.

2. Airbag device according to Claim 1, **characterized in that** the cover (4) is decoupled completely from the tensile stress in the remaining airbag woven fabric.

3. Airbag device according to Claim 1 or 2, **characterized in that** the cover (4) is formed in a woven fabric web (3) which faces the vehicle occupant.

4. Airbag device according to one of the preceding claims, **characterized in that** the cover (4) is configured as a pillow which projects in the direction of the vehicle occupant.

5. Airbag device according to one of the preceding claims, **characterized in that** the cover (4) is fastened, in particular sewn, to the airbag (1) as a separate fabric cutting.

6. Airbag device according to one of Claims 1 to 4, **characterized in that** the cover (4) is configured as part of a woven fabric web (3) of the airbag (1), which woven fabric web (3) is fastened to side webs (2) of the airbag and has a contour which points towards the vehicle occupant in the region of the cover (4).

7. Airbag device according to one of Claims 1 to 4, **characterized in that** the cover (4) consists of a woven fabric.

8. Airbag device according to one of Claims 4 to 7, **characterized in that** the pillow extends over the width of the airbag (1).

9. Airbag device according to one of the preceding claims, **characterized in that** traction bands (6) for absorbing tensile forces of the airbag woven fabric are arranged on that side of the cover (4) which faces away from the vehicle occupant.

10. Airbag device according to one of the preceding claims, **characterized in that** the airbag (1) is mounted above a vehicle occupant, in particular in a roof liner of a vehicle.

11. Airbag device according to one of the preceding claims, **characterized in that**, in the unfolded state, the airbag (1) extends as far as the abdominal region of the vehicle occupant.

## Revendications

1. Système de coussin gonflable comprenant un coussin gonflable (1) fabriqué à partir d'un tissu qui est fixé à une structure d'un véhicule et peut être rempli de gaz par un générateur de gaz et s'étend à l'état rempli devant le passager du véhicule, **caractérisé en ce qu'**une découpe (31), dans laquelle la tête du passager du véhicule peut pénétrer et qui est fermée par une coiffe (4) découplée d'un effort de traction dans le tissu du coussin gonflable, est formée dans le tissu du coussin gonflable dans la zone de choc à la tête.

2. Système de coussin gonflable selon la revendication 1, **caractérisé en ce que** la coiffe (4) est entièrement découplée de l'effort de traction dans le reste du tissu du coussin gonflable.

3. Système de coussin gonflable selon la revendication 1 ou 2, **caractérisé en ce que** la coiffe (4) est conçue dans une bande de tissu (3) tournée vers l'occupant du véhicule.

4. Système de coussin gonflable selon l'une quelconque des revendications précédentes, **caractérisé en ce que** la coiffe (4) est conçue comme un coussin faisant saillie en direction de l'occupant du véhicule.

5. Système de coussin gonflable selon l'une quelconque des revendications précédentes, **caractérisé en ce que** la coiffe (4) est fixée, en particulier cousue, en tant que pièce découpée séparée au coussin gonflable (1).

6. Système de coussin gonflable selon l'une quelconque des revendications 1 à 4, **caractérisé en ce que** la coiffe (4) est conçue comme une partie d'une bande de tissu (3) du coussin gonflable (1), qui est fixée aux bandes latérales (2) du coussin gonflable et présente dans la zone de la coiffe (4) un contour orienté en direction du passager du véhicule.

7. Système de coussin gonflable selon l'une quelconque des revendications 1 à 4, **caractérisé en ce que** la coiffe (4) est constituée de tissu.

8. Système de coussin gonflable selon l'une quelconque des revendications 4 à 7, **caractérisé en ce que** le coussin s'étend au-dessus de la largeur du coussin gonflable (1).

9. Système de coussin gonflable selon l'une quelconque des revendications précédentes, **caractérisé en ce que** des rubans peignés (6) destinés à réceptionner les forces de traction du tissu du coussin gonflable sont disposés sur le côté de la coiffe (4) dirigé à l'opposé du passager du véhicule.

10. Système de coussin gonflable selon l'une queconque des revendications précédentes, **caractérisé en ce que** le coussin gonflable (1) est monté au-dessus d'un passager du véhicule, en particulier dans un pavillon d'un véhicule.

11. Système de coussin gonflable selon l'une quelconque des revendications précédentes, **caractérisé en ce que** le coussin gonflable (1) s'étend à l'état déplié jusqu'à la zone de l'abdomen du passager du véhicule.
